# EUROPÄISCHE PATENTANMELDUNG

(11) **EP 4 371 916 A1**
(43) Veröffentlichungstag der Anmeldung: **22.05.2024**
(21) Anmeldenummer: 23201238.5
(22) Anmeldetag: 02.10.2023
(51) Int. Cl.: B65G 53/46, F04B 43/12, B65G 35/00

(54) **FÖRDEREINRICHTUNG ZUR GERICHTETEN FÖRDERUNG PULVERFÖRMIGER STOFFE SOWIE ZUGEHÖRIGES VERFAHREN**

(30) Priorität: 25.10.2022 DE 102022128182
(71) Anmelder: EAR Ritterbach GmbH & Co. KG, 33378 Rheda-Wiedenbrück (DE)
(72) Erfinder: RITTERBACH, Andreas, 33378 Rheda-Wiedenbrück (DE)
(74) Vertreter: Bauer Wagner Pellengahr Sroka

(57) **Zusammenfassung**

Die vorliegende Erfindung betrifft eine Fördereinrichtung (1) zur gerichteten Förderung pulverförmiger Stoffe entlang eines Förderkanals (2), umfassend einen Eingang (3), einen Ausgang (4), einen Antrieb (5), ein drehantreibbares Förderrad (7), eine Mehrzahl von Förderelementen (8, 9, 10), einen den Förderkanal (2) bereitstellenden Förderschlauch (12), entlang dessen die Stoffe gerichtet von dem Eingang (3) zu dem Ausgang (4) leitbar sind, ein Gegenlagerelement (13) zur Bildung eines Gegenlagers für den Förderschlauch (12), wobei das Gegenlagerelement (13) derart relativ zu dem Förderrad (7) angeordnet ist, dass sich eine Andrückseite (14) des Gegenlagerelements (13) zumindest im Wesentlichen konzentrisch zu dem Förderrad (7) in einem gegenüber dem Elementradius (11) größeren Andrückradius (18) um die Drehachse (6) erstreckt, wobei die Förderelemente (8, 9, 10), der Förderschlauch (12) und das Gegenlagerelement (13) derart zusammenwirken, dass die Förderelemente (8, 9, 10) jeweils dazu geeignet sind, im Zuge eines Drehantriebs des Förderrads (7) in einem Förderabschnitt (15) des Förderschlauchs (12) den Förderschlauch (12) wandernd an einer Andrückstelle gegen die Andrückseite (14) des Gegenlagerelements (13) zu drücken, wobei der Förderabschnitt (19) des Förderschlauchs (12) bezogen auf die Drehachse (6) des Förderrads (7) in einem Umschlingungswinkel (17) von weniger als 180° um das Förderrad (7) geführt ist.

Um eine Fördereinrichtung bereitzustellen, die gegenüber dem Stand der Technik vereinfacht ist, wird erfindungsgemäß vorgeschlagen, dass im Zuge eines Drehantriebs des Förderrads (7) sich zu jedem Zeitpunkt mindestens ein Förderelement (8, 9, 10) in Zusammenwirkung mit dem Gegenlagerelement (13) in drückendem Eingriff mit dem Förderschlauch (12) befindet.

## Beschreibung

Die vorliegende Anmeldung betrifft eine Fördereinrichtung zur gerichteten Förderung pulverförmiger Stoffe entlang eines Förderkanals gemäß dem Oberbegriff von Anspruch 1. Ferner betrifft die vorliegende Anmeldung ein Verfahren zur gerichteten Förderung pulverförmiger Stoffe gemäß Anspruch 10.

### Stand der Technik

Eine Fördereinrichtung mit den Merkmalen des Oberbegriffs des Anspruchs 1 ist im Stand der Technik bereits bekannt. Hierzu wird insbesondere auf die europäische Patentschrift EP 1 503 080 B1 hingewiesen. Diese beschreibt eine Fördereinrichtung, die zur Förderung pulverförmiger Stoffe eingerichtet ist. Die Besonderheit der Fördereinrichtung besteht darin, dass zur Unterstützung der Förderung der pulverförmigen Stoffe Druckluft in den Förderkanal einleitbar ist. Auf diese Weise wird die Förderung des jeweiligen Stoffs unterstützt. Im Übrigen findet die Förderung des jeweiligen pulverförmigen Stoffs mittels einer Schlauchpumpe statt.

Eine weitere Fördereinrichtung ist aus dem Dokument JP 2004123326 A bekannt. Diese beschreibt eine Fördereinrichtung, die einen Förderschlauch mit einem Luftzuführungsrohr umfasst, das mit einer stromabwärts gelegenen Seite eines Einlasses verbunden ist. Ferner umfasst die Fördereinrichtung ein Gegenlagerelement, um den Förderschlauch auf gekrümmte Weise zu stützen, und ein Förderrad mit einer Vielzahl von Förderelementen, um den Förderschlauch zusammenzudrücken und gegen eine gekrümmte Oberfläche des Gegenlagerelements zu drücken. Ferner umfasst die Fördereinrichtung eine Förderschlauch-Öffnungs-/Schließeinrichtung zum Öffnen/Schließen des Förderschlauchs auf der stromaufwärts gelegenen Seite der Verbindungsposition des Luftzuführungsrohrs und eine Luftzuführungsrohr-Öffnungs-/Schließeinrichtung. Zu fördernde Stoffe werden durch die elastische Verformung des Förderschlauchs, die durch die Rotation des Förderrads verursacht wird, angesaugt, indem die Öffnungs-/Schließeinrichtung des Förderschlauchs und die Öffnungs-/Schließeinrichtung des Luftzuführungsrohrs zu einem vorbestimmten Zeitpunkt mit der Rotation des Förderrads synchron betrieben werden, und die angesaugten Stoffe werden mit Luft aus dem Förderschlauch ausgestoßen.

Die bekannten Fördereinrichtungen haben sich insoweit als nachteilig herausgestellt, als sowohl an dem Eingang als auch an dem Ausgang der Fördereinrichtung jeweils gesteuerte Ventile vorgesehen werden müssen, um den Förderluftstrom, der zur Unterstützung der Stoffe in den Förderkanal eingebracht wird, steuern zu können. Hierbei ist es insbesondere erforderlich, dass der Förderluftstrom die Förderung der Stoffe in Richtung des Ausgangs unterstützt und nicht umgekehrt entlang des Förderkanals zurück in Richtung Eingang strömt. Die Konstruktion der Fördereinrichtungen ist entsprechend aufwendig und mit einer Steuerung zur periodischen Schaltung von verschiedenen Ventilen versehen, um die gerichtete Förderung der pulverförmigen Stoffe erfolgreich zu bewerkstelligen.

Ferner ist aus dem Dokument JP 04017789 A eine Fördereinrichtung bekannt, die einen Gehäusekörper aufweist, an dem ein bogenförmiges Wandoberflächenteil mit einem schwenkbaren Gehäuseteil zur Aufnahme eines zylindrischen Körpers ausgebildet ist. In dem Inneren des Gehäusekörpers weist die Fördereinrichtung einen rotierenden Presskörper auf. Eine Vielzahl von Rollen drückt nacheinander einen elastischen Zylinderkörper und ein Zwischenteil und setzt diese Gegenstände nacheinander unter Druck. Das schwenkbare Gehäusestück zur Aufnahme des zylindrischen Körpers ist durch ein Öffnungs-/Schließ-Betätigungsmittel, das mit dem Drehzustand des rotierenden Presskörpers zusammenwirkt, ordnungsgemäß schwenkbar ausgebildet. Dementsprechend kann ein transportierter Gegenstand mit verschlechterter Fließfähigkeit sicher und effizient unter Druck gesetzt werden.

Auch bei dieser Fördereinrichtung ist eine Synchronisierung einer Betätigung des schwenkbaren Gehäusestücks mit dem rotierenden Presskörper notwendig, um zu dem gewünschten Erfolg zu gelangen. Hierzu muss das Gehäusestück aktiv abgestimmt bewegt werden. Der Aufwand für die Konstruktion der Fördereinrichtung ist entsprechend ebenfalls hoch. Ferner ist eine Förderung von Gegenständen zuverlässig nur in vertikale Richtung mit Unterstützung der Schwerkraft möglich.

### Aufgabe

Der vorliegenden Anmeldung liegt mithin die Aufgabe zugrunde, eine Fördereinrichtung bereitzustellen, die gegenüber dem Stand der Technik vereinfacht ist. Ferner besteht die Aufgabe, ein zugehöriges Verfahren zur Förderung pulverförmiger Stoffe bereitzustellen.

### Lösung

Die zugrunde liegende Aufgabe wird erfindungsgemäß mittels einer Fördereinrichtung mit den Merkmalen des Anspruchs 1 gelöst. Vorteilhafte Ausgestaltungen ergeben sich aus den zugehörigen Unteransprüchen.

Die Fördereinrichtung ist nach Art einer Schlauchpumpe bzw. Peristaltikpumpe ausgebildet. Sie kann insbesondere in einer Pulverbeschichtungsanlage zum Einsatz kommen. Die Fördereinrichtung umfasst einen Eingang, einen Ausgang und einen Antrieb. Mittels des Antriebs ist ein Förderrad um eine Drehachse drehantreibbar. Das Förderrad ist entsprechend um die Drehachse drehbar gelagert und mit dem Antrieb in Kraft übertragender Weise gekoppelt. Insbesondere kann der Antrieb in Form eines Elektromotors ausgebildet sein, mittels dessen eine Abtriebswelle antreibbar ist, auf der das Förderrad gelagert ist. Eine Drehachse der Abtriebswelle ist in dieser Konstellation deckungsgleich mit der Drehachse des Förderrads. Die Drehachse, um die das Förderrad antreibbar ist, ist beispielsweise vertikal orientiert.

Ferner umfasst die Fördereinrichtung eine Mehrzahl von Förderelementen, die in einem Elementradius beabstandet von der Drehachse des Förderrads an dem Förderrad gelagert sind. Ferner sind die Förderelemente in einer zu der Drehachse orthogonalen Ebene betrachtet äquidistant um die Drehachse verteilt an dem Förderrad angeordnet, wobei vorzugsweise die Förderelemente einen radial außen umlaufenden Rand des Förderrads zugeordnet sind, sodass zumindest Teile der Förderelemente bezogen auf die Drehachse des Förderrads radial über letzteres vorstehen. Die Distanz zwischen benachbarten Förderelementen wird bezogen auf die Drehachse in einem Winkelmaß gemessen, wobei beispielsweise drei Förderelemente, die an einem Förderrad gelagert sind, jeweils in einem Abstand von 120° voneinander bezogen auf die Drehachse angeordnet sind. Die Elementradien, in denen die Förderelemente beabstandet von der Drehachse des Förderrads angeordnet sind, sind bevorzugt für alle Förderelemente gleich. Das Förderrad kann beispielsweise einander gegenüberliegende Scheiben aufweisen, die sich jeweils in einer senkrecht zu der Drehachse des Förderrads orientierten Ebene erstrecken und einen in Richtung der Drehachse gemessenen Abstand voneinander aufweisen. Die Förderelemente können sich bei dieser Konstellation zwischen den Scheiben erstrecken, wobei Längsachsen der Förderelemente parallel zu der Drehachse des Förderrads orientiert sind.

Die Fördereinrichtung umfasst ferner mindestens einen Förderschlauch, der sich von dem Eingang zu dem Ausgang erstreckt und zumindest einen Teil des Förderkanals bereitstellt, entlang dessen die pulverförmigen Stoffe förderbar sind. Der Förderschlauch ist elastisch ausgebildet, sodass er verformt werden kann, ohne dass eine permanente Änderung seiner Gestalt auftritt. Mit anderen Worten ist der Förderschlauch so beschaffen, dass er sich anschließend an eine Verformung, die durch eine von außen aufgebrachte Kraft auftritt, selbsttätig wieder in seine vorherige Form zurück verformt, sobald die Kraft nicht länger auf den Förderschlauch einwirkt. In einem unverformten Zustand kann ein Kanalquerschnitt des Förderschlauchs insbesondere kreisflächenförmig ausgebildet sein. Insbesondere kann der Förderschlauch von einem gummiartigen Material, beispielsweise einem elastomeren Kunststoff, gebildet sein. Der Förderschlauch ist mithin dazu geeignet, dass sich die pulverförmigen Stoffe ausgehend von dem Eingang der Fördereinrichtung durch den Förderschlauch hindurch zu dem Ausgang der Fördereinrichtung bewegen. Bevorzugt erstreckt sich der Förderschlauch in einer senkrecht zu der Drehachse des Förderrads orientierten Förderebene, wobei bevorzugt die Drehachse vertikal und mithin die Förderebene horizontal orientiert sind. Auf diese Weise können die Stoffe durch den Förderschlauch über eine sich in horizontale Richtung erstreckende Förderstrecke transportiert werden. Eine Förderung der Stoffe durch den Förderschlauch allein und/oder unter der Mitwirkung von Schwerkraft ist bei dieser Ausgestaltung nicht vorgesehen.

Des Weiteren umfasst die Fördereinrichtung ein Gegenlagerelement zu Bildung eines Gegenlagers für den Förderschlauch, wobei der Förderschlauch mittels der Förderelemente gegen das Gegenlagerelement drückbar ist. Dies bewirkt, dass im Zuge eines Drehantriebs des Förderrads mitsamt den daran angeordneten Förderelementen letztere den Förderschlauch in dessen Förderabschnitt gegen das Gegenlagerelement drücken und ihn dabei periodisch quetschen. Aufgrund der Elastizität des Förderschlauchs wird ein Kanalquerschnitt des Förderkanals, der sich innerhalb des Förderschlauchs senkrecht zu einer Mittelachse des Förderschlauchs erstreckt, infolge der Beaufschlagung mit der Druckkraft bis zumindest im Wesentlichen auf null reduziert, wobei eine Andrückstelle, an der ein jeweiliges Förderelement den Förderschlauch gegen das Gegenlagerelement drückt, im Zuge des Drehantriebs des Förderrads und der dadurch bedingten Bewegung der Förderelemente auf einer Kreisbahn um die Drehachse des Förderrads entlang einer Andrückseite des Gegenlagerelements wandert. Hierdurch wird die nach Art einer Schlauchpumpe bekannte Förderwirkung der Fördereinrichtung erzielt. Das Gegenlagerelement kann beispielsweise einstückig ausgebildet sein und dem Förderschlauch zumindest im Wesentlichen entlang einer gesamten Förderstrecke von dem Eingang bis zu dem Ausgang der Fördereinrichtung als Gegenlager dienen.

Das Gegenlagerelement ist derart relativ zu dem Förderrad angeordnet, dass sich die Andrückseite des Gegenlagerelements, an der das Gegenlagerelement mit dem Förderschlauch zusammenwirkt, zumindest im Wesentlichen konzentrisch zu dem Förderrad in einem gegenüber dem Elementradius der Förderelemente größeren Andrückradius um die Drehachse des Förderrads erstreckt. Der Förderschlauch erstreckt sich entsprechend in einem Zwischenraum zwischen dem Gegenlagerelement und dem Förderrad bzw. den daran gelagerten Förderelementen, wobei sich der Zwischenraum in radiale Richtung bezogen auf die Drehachse des Förderrads zwischen dem Elementradius und dem Andrückradius erstreckt. Da der Förderschlauch zur Erzielung der Förderwirkung gemäß der vorstehenden Erläuterung an einer jeweiligen Andrückstelle zumindest im Wesentlichen vollständig zusammengedrückt wird, entspricht die Differenz von Elementradius und Andrückradius vorteilhafterweise zumindest im Wesentlichen der Summe einer doppelten Wandstärke einer Wandung des Förderschlauchs und einem Radius des jeweiligen Förderelements um dessen eigene Längsachse.

Der Förderabschnitt des Förderschlauchs, in dem in der beschriebenen Weise die Förderelemente drückend mit der Andrückseite des Gegenlagerelements zusammenwirken, ist dabei bezogen auf die Drehachse des Förderrads in einem Umschlingungswinkel von weniger als 180° um das Förderrad herumgeführt. Ein Winkelabschnitt, auf dem ein jeweiliges Förderelement im Zuge einer vollen Umdrehung des Förderrads mit dem Gegenlagerelement zwecks Quetschung des Förderschlauchs zusammenwirkt, beträgt mithin ebenfalls weniger als 180°.

Die Fördereinrichtung ist dadurch gekennzeichnet, dass im Zuge eines Drehantriebs des Förderrads sich zu jedem Zeitpunkt mindestens ein Förderelement in Zusammenwirkung mit dem Gegenlagerelement in drückendem Eingriff mit dem Förderschlauch befindet. Mit anderen Worten wird der Förderschlauch zu jedem Zeitpunkt an mindestens einer Andrückstelle mittels mindestens eines Förderelements gegen die Andrückseite des Gegenlagerelements gedrückt, und zwar derart, dass sich der Kanalquerschnitt des Förderkanals unter elastischer Verformung des Förderschlauchs zumindest im Wesentlichen auf null reduziert. Mithin ist eine strömungstechnische Verbindung des Eingangs mit dem Ausgang, die von dem Förderkanal bereitgestellt ist, während eines Förderbetriebs der Fördereinrichtung zu keinem Zeitpunkt frei, sondern zu jedem Zeitpunkt an mindestens einer Stelle infolge des Quetschens des Förderschlauchs blockiert.

Ferner ist das Gegenlagerelement um eine parallel zu der Drehachse des Förderrads orientierte Schwenkachse verschwenkbar gelagert. Die Fördereinrichtung verfügt zudem über ein Spannelement, mittels dessen das Gegenlagerelement in Richtung auf das Förderrad zu vorspannbar ist. Das Spannelement kann dabei beispielsweise in Form einer Feder ausgebildet sein oder eine Feder umfassen. Das Spannelement ist bevorzugt derart eingestellt, dass eine Federkraft des Spannelements in Abwesenheit eines Gegendrucks mindestens eines der Förderelemente null ist und das Gegenlagerelement in Wirkungsrichtung der Spannkraft maximal in Richtung auf das Förderrad zu um die Schwenkachse ausgelenkt ist. In Abwesenheit eines Gegendrucks wäre das Spannelement entsprechend vollständig entspannt. Da während eines Förderbetriebs zu jedem Zeitpunkt mindestens ein Förderelement mit dem Gegenlagerelement zusammenwirkt, um den Förderschlauch bestimmungsgemäß zu drücken, ist das Spannelement zu keinem Zeitpunkt während des Förderbetriebs vollständig entspannt. Mit anderen Worten wirkt zu jedem Zeitpunkt eine Federkraft des Spannelements auf das Gegenlagerelement sowie gegen mindestens ein Förderelement.

Sobald folglich das Förderrad bzw. die daran gelagerten Förderelemente mit dem Gegenlagerelement zusammenwirken (eine Krafteinleitung von einem jeweiligen Förderelement in das Gegenlagerelement findet über den Förderschlauch statt, der dabei gequetscht wird), wird das Gegenlagerelement entgegen der Federkraft des Spannelements verdrängt, wobei der Förderschlauch wunschgemäß gequetscht wird. Eine Kraft, mit der diese Quetschung vorgenommen wird, entspricht dabei betragsmäßig zumindest im Wesentlichen der wirkenden Federkraft des Spannelements. Mit anderen Worten hält das Spannelement bestimmungsgemäß das Gegenlagerelement gegen die Förderelemente und ermöglicht auf diese Weise das Quetschen des Förderschlauchs.

Die erfindungsgemäße Fördereinrichtung hat viele Vorteile. Insbesondere ermöglicht sie die gerichtete Förderung pulverförmiger Stoffe, wobei im Unterschied zum Stand der Technik ein Förderluftstrom zwar unterstützend vorgesehen werden kann, für die Förderung der pulverförmigen Stoffe jedoch nicht zwingend erforderlich ist. Hierfür ist die beschriebene Quetschung des Förderschlauchs fortwährend an mindestens einer Stelle wesentlich, da diese dazu beiträgt, dass sich in einem Bereich zwischen dem Eingang der Fördereinrichtung und einem dem Eingang zugewandten Ende des Förderabschnitts des Förderschlauchs während des bestimmungsgemäßen Förderbetriebs der Fördereinrichtung dauerhaft ein Unterdruck ausbildet, sodass diese Seite des Förderrads die "Saugseite" der Fördereinrichtung bildet. Analog herrscht in einem Bereich zwischen einem dem Ausgang zugewandten Ende des Förderabschnitts des Förderschlauchs und dem Ausgang der Fördereinrichtung dauerhaft ein Überdruck, sodass diese Seite des Förderrads die "Druckseite" der Fördereinrichtung bildet.

Ferner hat die Ausgestaltung der Fördereinrichtung mit einem verschwenkbar gelagerten Gegenlagerelement den Vorteil, dass die Federkraft, mit dem das Gegenlagerelement im Zuge des Förderbetriebs der Fördereinrichtung gegen das Förderrad bzw. die Förderelemente gedrückt wird bzw. drückbar ist, sich im Zuge der Drehung des Förderrads und der zyklischen Wanderung der Förderelement entlang des Gegenlagerelements verändern kann. Hierfür ist es entsprechend besonders vorteilhaft, das beschriebene Spannelement vorzusehen, wobei bevorzugt das Spannelement derart einstellbar ist, dass eine Vorspannung des Spannelements veränderbar ist.

Infolge der verschwenkbaren Lagerung des Gegenlagerelements wird selbiges im Zuge eines Betriebs der Fördereinrichtung fortwährend von den Förderelementen elastisch entgegen der Federkraft des Spannelements verdrängt, wobei die Kraftübertragung von den Förderelementen auf das Gegenlagerelement über den Förderschlauch stattfindet, der im Zuge dessen gedrückt bzw. gequetscht wird. Diese Ausgestaltung hat den besonderen Vorteil, dass das Gegenlagerelement zuverlässig das "Abdrücken" des Förderkanals bewirken kann, da die Förderelemente gegen das Gegenlagerelement drücken und dieses entgegen der Federkraft um die Schwenkachse verschwenkt. Die Kraftübertragung zwischen den Förderelementen und dem Gegenlagerelement erfolgt hierbei vorzugsweise ausschließlich über den Förderschlauch, der im Zuge dessen gedrückt und damit für den Durchtritt von Luft versperrt wird. Die Notwendigkeit einer hochgenauen Abstimmung der relativen Anordnung des Förderschlauchs, der Förderelemente bzw. der Elementradien und des Gegenlagerelements zueinander kann entfallen, da das Gegenlagerelement in jedem Fall mittels des Spannelements gegen das Förderrad bzw. die Förderelemente gedrückt wird. Der drückende Eingriff der jeweiligen Förderelemente mit der Andrückseite des Gegenlagerelements ist auf diese Weise sichergestellt. Vorzugsweise ist das Gegenlagerelement einstückig ausgebildet. Ungeachtet dessen jedoch bevorzugt in Kombination bildet das Gegenlagerelement bevorzugt das gesamte bzw. einzige Gegenlager für den Förderschlauch. Vorzugsweise ist das Gegenlagerelement in Form eines Bügels ausgebildet.

Da im Unterschied zum Stand der Technik zu keinem Zeitpunkt während des Förderbetriebs der Förderkanal zwischen dem Eingang und dem Ausgang freigegeben ist bzw. wird, das heißt insbesondere Luft zu keinem Zeitpunkt frei von der Saugseite auf die Druckseite bzw. vom Eingang zu Ausgang strömen kann, können der beschriebene Unterdruck auf der Saugseite und der beschriebene Überdruck auf der Druckseite für die Dauer des Förderbetriebs der Fördereinrichtung aufrechterhalten werden. Hierdurch wird ein pulsierender Strom der pulverförmigen Stoffe erzeugt.

Im Stand der Technik wird der Förderkanal hingegen periodisch freigegeben, damit mittels der Förderluft, die der Saugseite der Fördereinrichtung zugeführt wird, die Stoffe in Richtung der Druckseite bzw. des Ausgangs der Fördereinrichtung ausgetrieben werden können. Die Quetschung des Förderschlauchs im Bereich des Gegenlagerelements dient im Stand der Technik zum einen zum Aufbau eines temporären Unterdrucks zur Ansaugung einer weiteren Menge des jeweiligen pulverförmigen Stoffs und zum anderen zum sich daran anschließenden Aufbau eines Überdrucks, der infolge der Einleitung der Förderluft in den dem Förderrad vorgelagerten Abschnitt des Förderschlauchs entsteht. Im Moment der Freigabe des Förderkanals entlädt sich dieser Überdruck in Richtung des Ausgangs, wodurch die pulverförmigen Stoffe in Richtung des Ausgangs ausgetrieben werden. Wie dargelegt, erfordert diese Konstruktion eine Vielzahl von Ventilen, damit die Förderluft in die richtige Richtung wirkt und die gewünschte Förderung der Stoffe bewirkt.

Bei der erfindungsgemäßen Fördereinrichtung werden hingegen Unterdruck und Überdruck allein infolge des Zusammenwirkens der Förderelemente mit dem Gegenlagerelement erzeugt, wobei aufgrund der Konservierung der Druckzustände auf der Saugseite und der Druckseite der Fördereinrichtung die gewünschte Förderwirkung erzielt werden kann. Hierfür bedarf es insbesondere keiner Ventile sowie keiner Steuerung, mittels der die Schaltung der Ventile koordiniert wird. Der Aufbau der erfindungsgemäßen Fördereinrichtung ist mithin gegenüber dem Stand der Technik deutlich vereinfacht. Dies schlägt sich auch darin nieder, dass die Fördereinrichtung besonders wenige Verschleißteile aufweist und daher besonders wartungsarm ist.

Ferner bedarf die erfindungsgemäße Vorrichtung nicht der Unterstützung der Schwerkraft, um die Stoffe im Bereich des Ausgangs aus dem Förderschlauch auszutreiben. Folglich bietet die Fördereinrichtung den besonderen Vorteil, dass sie zur Förderung pulverförmiger Stoffe entlang einer horizontalen Förderstrecke geeignet ist. Wie eingangs dargelegt kann es entsprechend besonders vorteilhaft sein, wenn die Drehachse des Förderrads vertikal orientiert ist und sich der Förderschlauch zumindest im Wesentlichen in einer senkrecht zu der Drehachse des Förderrads orientierten Förderebene erstreckt. Ein Fluss der pulverförmigen Stoffe findet infolge des Betriebs der Förderreinrichtung von dem Eingang zu dem Ausgang entsprechend in horizontale Richtung statt, das heißt in eine Richtung senkrecht zur Wirkungsrichtung der Schwerkraft.

Ferner kann die erfindungsgemäße Förderreinrichtung in ihrer Betriebsweise besonders einfach skaliert werden. Insbesondere kann die Menge der geförderten pulverförmigen Stoffe, das heißt der mittels der Förderreinrichtung bereitgestellte Massenstrom der Stoffe, mittels einer einfachen Veränderung der Drehzahl des Förderrads verändert werden. Die Fördereinrichtungen ist mithin für einen jeweiligen Verwendungszweck besonders einfach einstellbar.

Auch ist es denkbar, die Förderrichtung umzukehren, in dem die Drehrichtung des Förderrads verkehrt wird. Dies kann im einfachsten Fall mittels einer Umkehr der Spannungsversorgung des Antriebs erfolgen, sofern dieser von einem Elektromotor gebildet ist, der von einem Gleichstrommotor gebildet ist. In besonders bevorzugter Weise ist die Förderreinrichtung zumindest im Wesentlichen symmetrisch ausgebildet, sodass die Druckseite und die Saugseite infolge einer Veränderung der Drehrichtung des Förderrads wechselseitig getauscht werden können. Hierfür kann es besonders vorteilhaft sein, wenn die Schwenkachse des Gegenlagerelements verlagerbar bzw. veränderbar ist.

Betrachtet in einer Förderebene, in der sich der Förderschlauch von dem Eingang zu dem Ausgang erstreckt und gedanklich mit einem Koordinatenkreuz mit Nullpunkt in der Drehachse des Förderrads in vier Quadranten unterteilt ist, ist bevorzugt die Schwenkachse des Gegenlagerelements in dem Quadranten ("erster Quadrant") angeordnet, der in x-Richtung der Saugseite der Fördereinrichtung und in y-Richtung oberhalb des Eingangs angeordnet ist. Die x-Richtung ist hierbei beispielsweise in einer Achse von dem Eingang zu dem Ausgang orientiert, während die y-Richtung senkrecht zu der x-Richtung orientiert ist. Diese Anordnung der Schwenkachse relativ zu dem Förderrad hat den Vorteil, dass das Gegenlagerelement über den Förderabschnitt des Förderschlauchs betrachtet im Zuge einer oben beschriebenen Auslenkung infolge der Zusammenwirkung mit einem Förderelement entlang des Förderabschnitts betragsmäßig unterschiedlich stark ausgelenkt wird. Dies liegt darin begründet, dass die Stellen entlang der Andrückseite des Gegenlagerelements sich betragsmäßig bei einer Verschwenkung des Gegenlagerelements umso mehr bewegen, desto weiter sie von der Schwenkachse entfernt liegen.

Bevorzugt ist die Schwenkachse des Gegenlagerelements in unmittelbarer Nähe zu einem Anfangspunkt angeordnet, an dem im Förderbetrieb der Fördereinrichtung ein jeweiliges Förderelement im Zuge einer Umdrehung des Förderrads seinen Eingriff mit dem Gegenlagerelement beginnt. Hierdurch wird erreicht, dass das Gegenlagerelement zu Beginn eines zyklischen Eingriffs eines Förderelements mit dem Gegenlagerelement letzteres betragsmäßig stark ausgelenkt wird, da das Förderelement das Gegenlagerelement nah zur Schwenkachse des Gegenlagerelement verdrängt. Mit zunehmender Entfernung von der Schwenkachse fällt die Schwenkbewegung des Gegenlagerelements infolge der Zusammenwirkung des Gegenlagerelements mit dem jeweiligen Förderelements an dem Anfangspunkt mithin betragsmäßig größer aus. Die weitere Wanderung des Förderelements entlang der Andrückseite des Gegenlagerelements führt dazu, dass sich die Auslenkung des Gegenlagerelements wieder reduziert, das heißt letzteres - angetrieben durch die Federkraft des Spannelements - wieder sukzessiv in Richtung auf das Förderrad zu schwenkt (soweit es das Förderelement zulässt). Der drückende Eingriff von Förderelement und Gegenlagerelement infolge der Wirkung des Spannelements bleibt hierdurch durchgehend erhalten, sodass der Förderschlauch zuverlässig gequetscht wird.

Spätestens wenn das Förderelement nahe einem Endpunkt angekommen ist, an dem das Gegenlagerelement - und damit der Eingriff von Förderelement und Gegenlagerelement für die jeweilige Umdrehung des Förderrads - planmäßig endet, gerät bereits das nächste Förderelement am Anfangspunkt in Eingriff mit dem Gegenlagerelement. Hierdurch wird das Gegenlagerelement gemäß vorstehender Erläuterung wieder stärker ausgelenkt, wobei der Förderschlauch an dem Anfangspunkt gequetscht wird. Die Verschwenkung des Gegenlagerelements unterstütz gleichzeitig die Auflösung der Quetschung des Förderschlauchs an dem vorausgegangenen Förderelement am Endpunkt, da das Gegenlagerelement an dem Endpunkt (infolge des Eingriffs des nächsten Förderelements) in Richtung von dem Förderrad weg geschwenkt wird. Die beschriebene Ausgestaltung hat nach alldem den besonderen Vorteil, dass mechanisch gesteuert werden kann, dass zumindest im Wesentlichen zu jedem Zeitpunkt während des Förderbetriebs der Fördereinrichtung ein drückender Eingriff nur genau zwischen einem Förderelement und dem Gegenlagerelement vorliegt.

Die verschwenkbare Ausgestaltung des Gegenlagerelements hat im Übrigen den besonderen Vorteil, dass die Förderreinrichtung abseits eines normalen Förderbetriebs besonders einfach gespült werden kann ("Spülbetrieb"). Hierzu ist es lediglich erforderlich, die Vorspannung des Gegenlagerelements temporär aufzuheben, sodass das Andrücken des Gegenlagerelements mittels des Spannelements in Richtung auf das Förderrad zu entfällt. In diesem Zustand wird der Förderschlauch nicht mehr zwischen dem Gegenlagerelement und den Förderelementen gedrückt, jedenfalls nicht in solcher Weise, dass der Kanalquerschnitt des Förderkanals an einer Andrückstelle auf null reduziert ist. Mithin kann in diesem Zustand die Förderreinrichtung in einem Spülbetrieb betrieben werden, in dem der Förderkanal von dem Eingang durchgehend bis zu dem Ausgang und umgekehrt strömungstechnisch frei ist. Mittels Anlegens eines Spülluftstroms kann der Förderkanal durchgespült werden, wobei insbesondere etwaige Reste der pulverförmigen Stoffe aus dem Förderkanal ausgetrieben werden. Für eine Fortsetzung des normalen Förderbetriebs der Förderreinrichtung ist es lediglich erforderlich, die Vorspannung auf das Gegenlagerelement wiederherzustellen und gegebenenfalls den Antrieb wieder zu aktivieren, sodass das Förderrad drehangetrieben wird. In besonders bevorzugter Weise kann das Spannelement wechselweise von dem Gegenlagerelement entkoppelt und an das Gegenlagerelement angekoppelt werden, wobei die Federkraft des Spannelement nur dann auf das Gegenlagerelement wirkt, wenn das Spannelement an das Gegenlagerelement angekoppelt ist.

Besonders bevorzugt ist der Antrieb von einem Schrittmotor gebildet, der in solcher Weise ansteuerbar ist, dass er an einer definierten Stelle stoppt. Hierdurch kann die Stellung der Förderelemente im Moment des Stillstands des Antriebs kontrolliert werden, sodass beispielsweise gezielt beim Stillstand des Antriebs eines der Förderelemente an einer bestimmten Stelle der Andrückseite des Gegenlagerelements den Förderschlauch gegen das Gegenlagerelement drückt. Auf diese Weise ist es beispielsweise denkbar, einen Betrieb der Förderreinrichtung für einen bestimmten Zeitraum zu unterbrechen, gleichwohl jedoch in dem Förderschlauch den Unterdruck auf der Saugseite sowie den Überdruck auf der Druckseite zu konservieren.

Weiterhin kann eine solche Ausgestaltung der Fördereinrichtung vorteilhaft sein, bei der die Förderelemente zylinderförmig ausgebildet sind. Vorzugsweise sind die Förderelemente dabei um ihre Längsachse frei drehbar an dem Förderrad gelagert. Dies kann insbesondere der Fall sein, wenn das Förderrad zwei in Richtung der Drehachse des Förderrads voneinander beabstandete Scheiben umfasst, zwischen denen sich die Förderelemente erstrecken, wobei Lagerachsen der Förderelemente jeweils endseitig in den Scheiben gelagert sind, sodass Mäntel der Förderelemente jeweils um ihre Lagerachse frei drehbar gelagert sind. Die Längsachsen der Förderelement sind parallel zu der Drehachse des Förderrads orientiert. Die Ausgestaltung zylinderförmiger Förderelemente hat den Vorteil, dass eine Kraftübertragung von dem jeweiligen Förderelement über den Förderschlauch auf das Gegenlagerelement zumindest im Wesentlichen an einer Andrückstelle (in Form einer sich parallel zu der Längsachse des jeweiligen Förderelements orientierten "Andrücklinie") stattfindet, an der der Förderschlauch entsprechend zuverlässig gedrückt wird, und zwar in solcher Weise, dass der Kanalquerschnitt des von dem Förderschlauch beschriebenen Förderkanals zumindest im Wesentlichen, vorzugsweise vollständig, auf null reduziert wird.

Die drehbare Lagerung der Förderelemente hat zudem den Vorteil, dass eine Reibung zwischen den Förderelementen und dem Förderschlauch stark reduziert ist, wodurch wiederum ein Verschleiß des Förderschlauchs im Zuge des Förderbetriebs der Fördereinrichtung reduziert ist. Für die Förderwirkung ist ein reibender Kontakt zwischen den Förderelementen und dem Förderschlauch nicht erforderlich, sondern lediglich die Quetschung des Förderschlauchs an der wandernden Andrückstelle. Entsprechend ist es lediglich von Vorteil, wenn das jeweilige Förderelement um dessen Längsachse relativ zu dem Förderschlauch abrollen kann, um in der beschriebenen Weise das Auftreten von Reibkräften an einer äußeren Mantelfläche des Förderschlauchs zu vermeiden.

In einer weiterhin besonders vorteilhaften Ausgestaltung der Fördereinrichtung umfasst selbige eine Druckquelle zur Bereitstellung eines Förderluftstroms, einen Luftanschluss zur mittelbaren oder unmittelbaren Einbringung des Förderluftstroms in den Förderkanal sowie eine Luftleitung zur mittelbaren oder unmittelbaren strömungstechnischen Verbindung der Druckquelle mit dem Luftanschluss. Die Druckquelle kann beispielsweise von einem Kompressor gebildet sein, mittels dessen Druckluft erzeugt und zur Einbringung in den Förderkanal bereitgestellt werden kann. Der Luftanschluss kann entweder unmittelbar mit dem Förderkanal zusammenwirken, beispielsweise infolge einer Ausgestaltung eines Einlasses an dem Förderschlauch. Ebenfalls ist es denkbar, dass der Luftanschluss beispielsweise an dem Ausgang der Fördereinrichtung ausgebildet ist, sodass die Förderluft zunächst in den Ausgang und sodann durch eine strömungstechnische Verbindung in den Förderkanal eingebracht wird. Diese Ausgestaltung entspricht im Sinne der vorliegenden Anmeldung einem mittelbaren Anschluss des Luftanschlusses an den Förderkanal. Wesentlich ist, dass der Luftanschluss stromabwärts des Förderrads an den Förderkanal angeschlossen ist. Aufgrund den im Förderbetrieb durchgehenden Eingriffs mindestens eines Förderelements mit dem Förderschlauch kann die bereitgestellte Förderluft nicht in Richtung des Eingangs strömen, da der Förderschlauch fortwährend an einer jeweiligen Andrückstelle entlang des Gegenlagerelements abgedrückt bzw. gequetscht ist. Gemäß obiger Nomenklatur ist der Luftanschluss mithin der Druckseite der Fördereinrichtung zugeordnet. Hierbei ist es zunächst sekundär, ob der Luftanschluss unmittelbar im Anschluss an das Förderrad, d.h. unmittelbar in der Nähe des dem Ausgang zugewandtem Ende des Förderabschnitts des Förderschlauchs, an dem Förderschlauch ausgebildet ist oder beispielsweise erst am Ausgang der Fördereinrichtung angeordnet ist. Bevorzugt ist der Luftanschluss gleichwohl möglichst nah stromabwärts der Fördereinrichtung angeordnet.

Im Unterschied zum Stand der Technik hat die Förderluft nicht den primären Zweck, die Förderung der pulverförmigen Stoffe zu bewerkstelligen. Gemäß vorstehender Erläuterung kann dies auch ausschließlich mittels Betriebs des Förderrads in Zusammenwirkung mit den Förderelementen, dem Förderschlauch und dem Gegenlagerelement erfolgen. Gleichwohl kann die Förderluft auch eine positive Wirkung auf den Massenstrom der pulverförmigen Stoffe haben, wobei die Förderluft insbesondere eine vergleichmäßigende Wirkung hat. Mithin kann mittels des Einbringens von Förderluft die pulsierende Abgabe der pulverförmigen Stoffe aus der Fördereinrichtung vergleichmäßigt werden hin zu einem möglichst homogenen Massenstrom der pulverförmigen Stoffe. Hierdurch eignet sich die Fördereinrichtung besonders gut zum Einsatz in einer Pulverbeschichtungsanlage. Dabei kann es besonders vorteilhaft sein, wenn im Anschluss an den Ausgang die pulverförmigen Stoffe über eine Homogenisierungsstrecke, beispielsweise entlang eines weiteren Förderschlauchs, gefördert werden, sodass der Förderluftstrom den Massenstrom der pulverförmigen Stoffe homogenisierten kann.

In bevorzugter Ausgestaltung umfasst die Fördereinrichtung genau einen Luftanschluss, mittels dessen die Förderluft in den Förderkanal eingebracht wird. Dies ist im Hinblick auf die Einfachheit der Ausgestaltung der Fördereinrichtung besonders vorteilhaft, da lediglich an einer Stelle, nämlich an der Stelle des Luftanschlusses, ein Überdruck infolge des Anschlusses von Druckluft in das System eingebracht wird. Eine mehr oder minder aufwändige Verschaltung verschiedener Luftanschlüsse, die insbesondere mittels Ventilen oder dergleichen erfolgen sollte oder müsste, kann hierdurch entfallen. Im Übrigen ist die Ausgestaltung lediglich eines Luftanschlusses für die Aufgabe der Homogenisierung des Massenstroms der pulverförmigen Stoffe ausreichend.

In einer weiterhin vorteilhaften Ausgestaltung der Fördereinrichtung weist das Gegenlagerelement eine sich entlang der Andrückseite in Bewegungsrichtung der Förderelemente erstreckende Rille auf, innerhalb der im Zuge eines Eingriffs des Gegenlagerelements mit den Förderelementen der Förderschlauch geführt ist. Die Rille beschreibt hierbei eine Vertiefung in einer Oberfläche der Andrückseite, die sich parallel zu dem Förderschlauch entlang der Andrückseite erstreckt. Diese Ausgestaltung hat zunächst den Vorteil, dass der Förderschlauch in der Rille gelagert ist, wobei der Förderschlauch mittels seitlicher Wandungen der Rille in einer eindeutigen Position an dem Gegenlagerelement bzw. dessen Andrückseite geführt ist. Hierdurch ist ein unbeabsichtigtes Verrutschen des Förderschlauchs im Zuge des Förderbetriebs der Fördereinrichtung unterbunden. Im Weiteren hat sich bei Versuchen herausgestellt, dass die Ausgestaltung der Rille eine verschleißhemmende Wirkung auf den Förderschlauch hat. Dies liegt darin begründet, dass der Förderschlauch in Gegenwart einer Andrückkraft eines jeweiligen Förderelements in den Raum der Rille, die gegenüber der Oberfläche der Andrückseite des Gegenlagerelements minimal zurückgesetzt ist, ausweichen kann.

Weiterhin kann eine solche Ausgestaltung der Fördereinrichtung besonders von Vorteil sein, bei der an dem Förderrad mindestens drei Förderelemente, vorzugsweise genau drei Förderelemente, gelagert sind. Diese Ausgestaltung hat sich als besonders vorteilhaft herausgestellt, um in der gewünschten Weise zu jedem Zeitpunkt während eines Betriebs der Fördereinrichtung mindestens ein Förderelement in Zusammenwirkung mit dem Gegenlagerelement in drückenden Eingriff mit dem Förderschlauch zu versetzen. Bevorzugt sind die Förderelemente äquidistant an dem Förderrad angeordnet, wobei bei drei Förderelementen selbige mithin untereinander in einem Winkelabstand von 120° um die Drehachse des Förderrads verteilt angeordnet sind.

Um den Eingriff der Förderelemente mit dem Gegenlagerelement zu koordinieren, sind die Andrückseite des Gegenlagerelements, die Anzahl der Förderelemente bzw. der Winkelabstand benachbarter Förderelemente und der Förderabschnitt des Förderschlauchs aufeinander abgestimmt. Am Beispiel einer Ausgestaltung der Fördereinrichtung mit drei Förderelementen, die in einem Winkelabstand von 120° zueinander angeordnet sind, ist es entsprechend vorteilhaft, wenn sich die Andrückseite des Gegenlagerelements ebenfalls zumindest im Wesentlichen um 120° bezogen auf die Drehachse des Förderrads in dem Andrückradius um die Drehachse des Förderrads erstreckt. Der Förderabschnitt des Förderschlauchs, in dem selbiger unter Einwirkung der Förderelemente und des Gegenlagerelements zwischen beiden gedrückt wird, erstreckt sich hierbei ebenfalls zumindest im Wesentlichen über das Winkelmaß von 120° bezogen auf die Drehachse des Förderrads. Der Radius des Förderrads bzw. die Elementradien der einzelnen Förderelemente sowie der Andrückradius des Gegenlagerelements sind hierbei grundsätzlich beliebig skalierbar, sodass Aussagen zu absoluten Kreisbogenlängen des Förderabschnitts und/oder der Andrückseite des Gegenlagerelements ohne weitere Relevanz sind. Entscheidend ist die Abstimmung der Winkelmaße aufeinander, sodass immer ein jeweiliges Förderelement bereits in drückenden Eingriff mit dem Gegenlagerelement tritt, bevor das vorherige Förderelement den Eingriff mit dem Gegenlagerelement verloren hat und sich mithin die Andrückstelle des Förderschlauchs an dem vorherigen Förderelement aufgelöst hat. Folglich wird der Förderschlauch zu jedem Zeitpunkt an mindestens einer Andrückstelle gedrückt und trennt dadurch Saug- und Druckseite des Förderschlauchs.

Während des normalen Förderbetriebs der Fördereinrichtung kommt es typischerweise dazu, dass kurzzeitig bei einem Übergang des Eingriffs eines Förderelements mit dem Gegenlagerelement zu dem Eingriff des nachfolgenden Förderelements mit dem Gegenlagerelement gleichzeitig zwei Andrückstellen vorliegen, an denen der Förderschlauch gedrückt ist und mithin der Kanalquerschnitt des Förderkanals zumindest im Wesentlichen auf null reduziert ist. Entsprechend ist es bei einer Ausgestaltung der Förderreinrichtung mit drei Förderelementen bevorzugt, wenn ein Eingriffwinkelbereich eines jeden Förderelements, über den hinweg sich das jeweilige Förderelement im Zuge einer vollen Umdrehung des Förderrads in Eingriff mit dem Gegenlagerelement befindet, mindestens 120° und höchstens 140°, vorzugsweise höchstens 130°, beträgt. Bei dieser Ausgestaltung ist sichergestellt, dass zu keinem Zeitpunkt der Kanalquerschnitt des Förderkanals freigegeben wird, da zu jeder Zeit mindestens ein Förderelement in Eingriff mit dem Gegenlagerelement steht. Umso größer der Eingriffwinkelbereich eines jeweiligen Förderelements ist, desto länger ist der Zeitraum während einer Umdrehung des Förderrads, über den hinweg der Förderschlauch an zwei Andrückstellen gedrückt ist. Dieser Zustand, in dem der Förderschlauch an zwei Andrückstellen gedrückt ist, soll jedoch nicht zu lange anhalten, da ansonsten eine Verblockung des Förderkanals mit den pulverförmigen Stoffen zu befürchten ist. Entsprechend ist es von Vorteil, wenn die Eingriffwinkelbereiche der Förderelemente - wie beschrieben - jeweils höchstens 140°, vorzugsweise höchstens 130°, betragen.

In einer weiterhin vorteilhaften Ausgestaltung kann das Förderrad mit mehreren Wirkungsebenen bzw. Förderebenen ausgestaltet sein. Jeder dieser Wirkungsebenen sind eine Mehrzahl von Förderelementen sowie ein Förderschlauch zugeordnet, der in der beschriebenen Weise unter Einwirkung der Förderelemente periodisch gegen ein Gegenlagerelement gedrückt wird, sodass die pulverförmigen Stoffe nach Art einer Schlauchpumpe gefördert werden können. Jeder der Förderschläuche erstreckt sich dabei in einer eigenen Förderebene, wobei die Förderebenen in Richtung der Drehachse voneinander beabstandet sind und parallel zueinander orientiert sind. Die verschiedenen Wirkungsebenen des Förderrads (und mithin Förderebenen der Förderschläuche) sind in eine Richtung parallel zu der Drehachse des Förderrads betrachtet voneinander beabstandet. Mithin kann das Förderrad in den verschiedenen Wirkungsebenen jeweils mit einem Förderschlauch und somit in Summe mit mehreren Förderschläuchen zusammenwirken, wodurch ein Massenstrom der pulverförmigen Stoffe, die mittels der Förderreinrichtung gefördert werden, vervielfacht werden kann. Auch ist es denkbar, dass in den verschiedenen Wirkungsebenen die Förderelemente phasenversetzt zu den Förderelementen in den jeweils anderen Wirkungsebenen angeordnet sind. Hierdurch ist es möglich, die typischerweise pulsierende Abgabe der pulverförmigen Stoffe, die infolge der Förderung mittels der Förderreinrichtung erfolgt, über die verschiedenen Wirkungsebenen hinweg zu vergleichmäßigen. Hierfür kann es besonders vorteilhaft sein, wenn jenseits der Wirkungsebenen bzw. des Förderrads die Förderschläuche strömungstechnisch miteinander verbunden werden, um die Massenströme der pulverförmigen Stoffe, die mittels der einzelnen Wirkungsebenen gefördert werden, zusammenzuführen.

Die erfindungsgemäße Förderreinrichtung ist besonders gut zur Verwendung zur Förderung pulverförmiger Stoffe geeignet. Entsprechend ist es ebenfalls Gegenstand der Erfindung, die beschriebene Förderreinrichtung gemäß einem der zugehörigen Ansprüche für die Förderung pulverförmiger Stoffe zu verwenden. Typischerweise kommen Schlauchpumpen für die Förderung von Flüssigkeiten zum Einsatz. Die besondere Ausgestaltung der erfindungsgemäßen Förderreinrichtung zielt jedoch insbesondere auf die Förderung pulverförmiger Stoffe ab, sodass die Förderreinrichtung beispielsweise in einer Pulverbeschichtungsanlage verwendet werden kann.

Die zugrunde liegende Aufgabe wird ferner mittels eines Verfahrens mit den Merkmalen des Anspruchs 10 gelöst. Vorteilhafte Ausgestaltungen ergeben sich aus den zugehörigen Unteransprüchen.

Für die Durchführung des Verfahrens kommt die erfindungsgemäße Förderreinrichtung gemäß einem der zugehörigen Ansprüche zum Einsatz. Hierbei umfasst das Verfahren die folgenden Verfahrensschritte: Das Förderrad der Förderreinrichtung wird mittels des zugeordneten Antriebs um seine Drehachse drehangetrieben, wodurch die an dem Förderrad angeordneten Förderelemente jeweils in ihrem Elementradius auf einer Kreisbahn um die Drehachse geführt werden. Im Zuge ihres Drehantriebs treten die Förderelemente zyklisch in Eingriff mit dem Gegenlagerelement bzw. dessen Andrückseite, wobei ein drückender Eingriff zwischen einem jeweiligen Förderelement und dem Gegenlagerelement an einem Anfangspunkt beginnt, wobei der drückende Eingriff durch ein Drücken des Förderschlauchs an einer Andrückstelle definiert ist. Im Zuge der weiteren Drehung des Förderrads und einer damit einhergehenden Bewegung des jeweiligen Förderelements auf seiner Kreisbahn wandert die Andrückstelle, an der der Förderschlauch gedrückt und damit der Kanalquerschnitt des Förderkanals des Förderschlauchs zumindest im Wesentlichen auf null reduziert wird, entlang der Andrückseite des Gegenlagerelements bis zu einem Endpunkt. Dieser ist dadurch definiert, dass bei einer weiteren Bewegung des Förderelements auf dessen Kreisbahn um die Drehachse des Förderrads der drückende Eingriff mit dem Gegenlagerelement aufgelöst und dadurch die Quetschung des Förderschlauchs aufgehoben werden. Mithin verschwindet an dem Endpunkt die Andrückstelle, sodass der Kanalquerschnitt des Förderkanals lokal wieder freigegeben ist. Die Drehachse des Förderrads ist bevorzugt vertikal und eine Förderebene, in der die pulverförmigen Stoffe entlang des Förderschlauchs gefördert werden, bevorzugt senkrecht zu der Drehachse (und mithin horizontal) orientiert.

Hierbei ist es gemäß vorstehender Erläuterung besonders bedeutsam, dass zu jedem Zeitpunkt während des Förderbetriebs der Förderreinrichtung sich mindestens ein Förderelement in Zusammenwirkung mit dem Gegenlagerelement in drückendem Eingriff mit dem Förderschlauch befindet. Mithin ist es ebenfalls bedeutsam, dass zu dem Zeitpunkt, an dem sich ein jeweiliges Förderelements an dem Endpunkt befindet, an dem die Zusammenwirkung desselben mit dem Gegenlagerelement endet, sich bereits das nachfolgende Förderelement an seinem Anfangspunkt bzw. jenseits des Anfangspunkts befindet. Auf diese Weise ist sichergestellt, dass bei einem Wegfall der Andrückstelle an dem Ende der Andrückseite des Gegenlagerelements an dem Anfang der Andrückseite bereits eine neue Andrückstelle ausgebildet ist. Da der Förderschlauch von einem elastischen Material gebildet ist und mithin infolge des Andrückens zwischen einem jeweiligen Förderelement und dem Gegenlagerelement keine plastische Verformung auftreten, kann sich der Kanalquerschnitt des von dem Förderschlauch bereitgestellten Förderkanals nach Wegfall der Andrückkraft wieder aufweiten und den Durchtritt der pulverförmigen Stoffe freigeben.

Das erfindungsgemäße Verfahren hat viele Vorteile. Insbesondere ermöglicht es die Förderung pulverförmiger Stoffe, ohne dass es hierzu zwingend des Einsatzes von Förderluft bedarf. Diese ist gemäß vorstehender Erläuterung zwar in vorteilhafter Weise verwendbar, jedoch nicht zwingend erforderlich. Selbst wenn Förderluft zum Einsatz kommt, um den Massenstrom der pulverförmigen Stoffe zu homogenisieren, ist ein Luftvolumenstrom, der hierfür zum Einsatz kommt, gegenüber im Stand der Technik bekannten Fördereinrichtungen für pulverförmige Stoffe, die insbesondere nach dem Venturi-Prinzip arbeiten, deutlich reduziert. Entsprechend ist auch der Verschleiß der verwendeten Bauteile, insbesondere des Förderschlauchs, bei Anwendung des Verfahrens besonders gering. Ferner ist die Einbringung von Förderluft in aller Regel lediglich auf der Druckseite, das heißt stromabwärts des Förderrads bzw. des oben genannten Endpunkts vorteilhaft, um die Stoffe im Zuge des Abtransports von der Förderreinrichtung weg unterstützen und einen Massenstrom der Stoffe zu homogenisieren.

Besonders bevorzugt können die pulverförmigen Stoffe stromaufwärts des Eingangs der Fördereinrichtung "fluidisiert" werden, sodass der mittels der Fördereinrichtung auf dessen Saugseite erzeugte Unterdruck die Stoffe besonders einfach ansaugen kann. Hierzu ist es beispielsweise denkbar, einen Luftvolumenstrom in einen Behälter einzuleiten, in dem die pulverförmigen Stoffe gelagert sind. Hierdurch wird die Fluidisierung erreicht. Der Luftstrom kann insbesondere verteilt über eine Fläche, beispielsweise über eine gerastert perforierte Bodenplatte des Behälters, in die pulverförmigen Stoffe eingeleitet werden, wobei die eingeleitete Luft die pulverförmigen Stoffe ausgehend von der Bodenplatte nach oben durchströmt und an einem oberen Stoffspiegel der pulverförmigen Stoffe aus diesen austritt. Die Fluidisierung führt dazu, dass die pulverförmigen Stoffe "gemischt" mit Luft vorliegen und sich dadurch ähnlich zu einer Flüssigkeit verhalten. Hierdurch ist die Ansaugung mittels der erfindungsgemäßen Fördereinrichtung besonders gut möglich. Der Förderschlauch wird derart in den Behälter geführt, dass er strömungstechnisch mit den darin gelagerten Stoffen verbunden ist, sodass die Stoffe mittels der Fördereinrichtung angesaugt werden können.

Erfindungsgemäß ist das Gegenlagerelement um eine zu der Drehachse des Förderrads parallel orientierte Schwenkachse verschwenkbar gelagert, wobei das Gegenlagerelement mittels eines Spannelements in Richtung auf das Förderrad zu vorgespannt ist bzw. wird. Dies bewirkt, dass das Gegenlagerelement fortwährend mit einer Federkraft in Richtung auf das Förderrad zu gedrückt wird. Hierdurch kann eine besonders zuverlässige Ausbildung der jeweiligen Andrückstelle zwischen einem jeweiligen Förderelement und dem Gegenlagerelement erreicht werden, wobei das Gegenlagerelement einem Druck des jeweiligen Förderelements elastisch, das heißt entgegen der Federkraft des Spannelements, ausweichen kann, sodass eine übermäßige mechanische Beanspruchung des Förderschlauchs vermieden ist. Ebenfalls entfällt gemäß vorstehender Erläuterung eine hochgenaue relative Anordnung von Förderelementen Gegenlagerelement und Förderschlauch zueinander.

Weiterhin kann es besonders vorteilhaft sein, wenn die Förderreinrichtung eine Druckquelle zur Bereitstellung eines Förderluftstroms, einen Luftanschluss zur mittelbaren oder unmittelbaren Einbringung des Förderluftstroms in den Förderkanal sowie eine Luftleitung zur mittelbaren oder unmittelbar strömungstechnischen Verbindung der Druckquelle mit dem Luftanschluss umfasst. Hierbei ist der Luftanschluss - in Förderrichtung der pulverförmigen Stoffe betrachtet - stromabwärts des Förderrads an den Förderkanal angeschlossen. Zumindest während eines Förderbetriebs der Förderreinrichtung wird mittels der Druckquelle ein Förderluftstrom erzeugt und mittels der Luftleitung zu dem Luftanschluss geführt. Der Förderluftstrom gelangt auf diese Weise in den Förderkanal und kann dort in gewünschter Weise eine homogenisierende Wirkung auf den Massenstrom der pulverförmigen Stoffe ausüben. Ferner hilft der Förderluftstrom dabei, die pulverförmigen Stoffe zu "fluidisieren", sodass diese jenseits des Ausgangs der Förderreinrichtung über eine längere Förderstrecke hinweg weiter gefördert werden können. Diese Förderstrecke kann gleichzeitig als Homogenisierungsstrecke wirken, sodass an einem der Förderreinrichtung abgewandten Ende der Förderstrecke die pulverförmigen Stoffe mit einem zumindest im Wesentlichen konstanten Massenstrom abgegeben werden. Hierdurch ist das Verfahren für die Anwendung im Rahmen einer Pulverbeschichtungsanlage besonders gut geeignet.

Sofern die Einbringung eines Förderluftstroms mittels einer Druckquelle vorgenommen wird, ist es weiterhin besonders vorteilhaft, wenn der Förderluftstrom unterbrechungsfrei in den Förderkanal eingebracht wird. Hierdurch kann die homogenisieren Wirkung des Förderluftstroms besonders gut erreicht werden.

Weiterhin ist es vorteilhaft, wenn der Förderluftstrom mit einem konstanten Volumenstrom eingebracht wird, wobei der Volumenstrom bevorzugt in Abhängigkeit von einem Querschnitt des Förderkanals und/oder einer Länge einer Abgabeleitung gewählt wird, die sich von dem Ausgang bis zu einer Abgabestelle der pulverförmigen Stoffe erstreckt. Insbesondere kann der Volumenstrom des Förderluftstroms bei einer Veränderung einer Fördermenge der pulverförmigen Stoffe, die beispielsweise mittels einer Veränderung einer Drehzahl des Förderrads herbeigeführt werden kann, unverändert bleiben. Bevorzugt beträgt der Volumenstrom des Förderluftstroms zwischen 5 Normalliter pro Minute (Nl/min) und 25 NI/min, vorzugsweise zwischen 10 Nl/min und 20 Nl/min.

### Ausführungsbeispiele

Die Erfindung ist nachstehend anhand eines Ausführungsbeispiels, das in den Figuren dargestellt ist, näher erläutert. Es zeigt:
- Fig. 1:: Eine Draufsicht auf eine erfindungsgemäße Förderreinrichtung,
- Fig. 2:: Eine Explosionsdarstellung der Förderreinrichtung gemäß Figur 1,
- Fig. 3:: Eine perspektivische Ansicht auf die Explosionsdarstellung gemäß Figur 2.

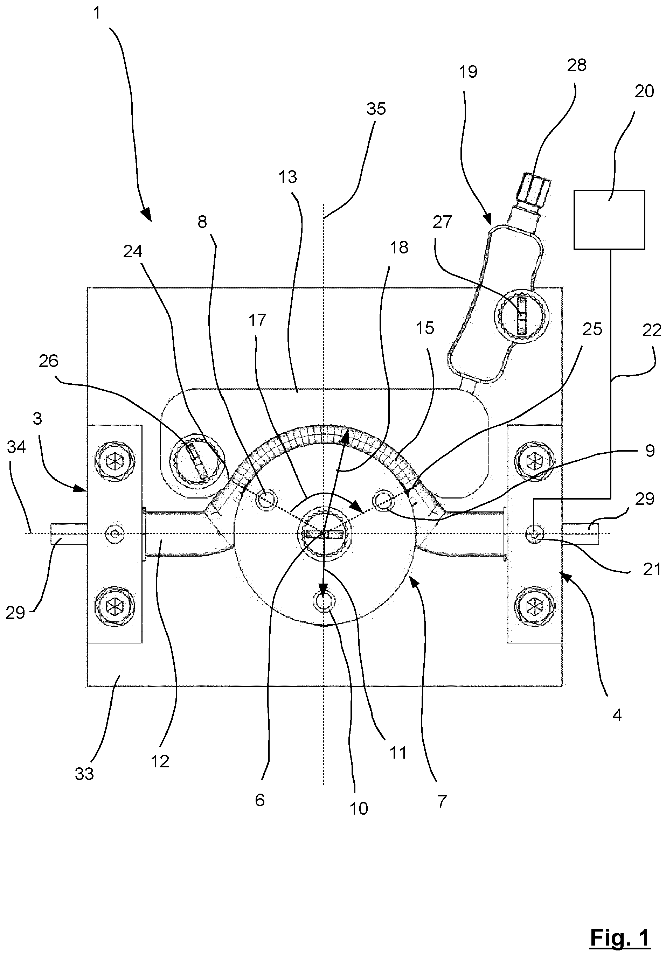

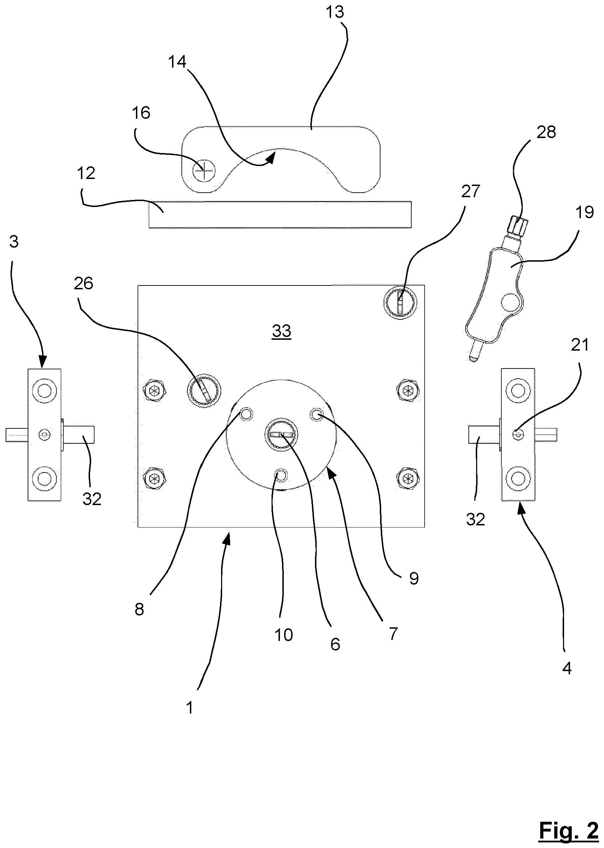

Ein Ausführungsbeispiel, das in den **Figuren 1 bis 3** gezeigt ist, umfasst eine erfindungsgemäße Förderreinrichtung **1.** Diese umfasst einen Eingang **3,** durch den pulverförmige Stoffe, die mittels der Förderreinrichtung **1** gefördert werden sollen, eintreten können. Ferner umfasst die Förderreinrichtung **1** einen Ausgang **4,** durch den hindurch die pulverförmigen Stoffe austreten können. Die Förderreinrichtung **1** ist derart konzipiert, dass die pulverförmigen Stoffe ausgehend von dem Eingang **3** zu dem Ausgang **4** gerichtet gefördert werden können.

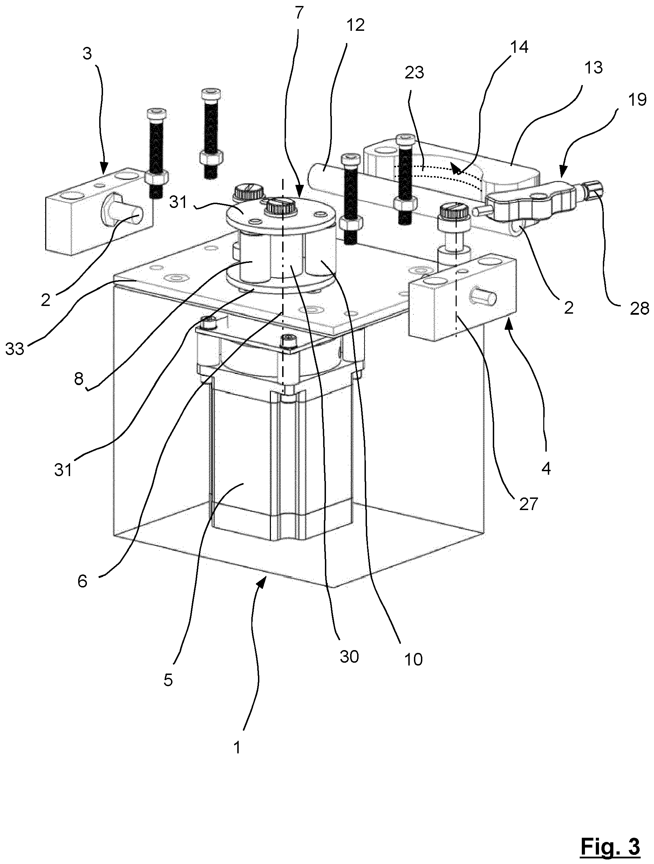

Hierzu umfasst die Förderreinrichtung **1** ferner einen Antrieb **5,** der hier von einem elektrischen Schrittmotor gebildet ist. Dieser Antrieb **5** verfügt über eine Abtriebswelle **30,** die mit einem Förderrad **7** in Drehmoment übertragender Weise wirkverbunden ist. Die Antriebswelle **30** ist vertikal orientiert. Das Förderrad **7** umfasst in dem gezeigten Beispiel zwei voneinander beabstandete, parallel zueinander orientierte Scheiben **31.** Diese Scheiben **31** sind senkrecht zu einer Drehachse **6** des Förderrads **7** orientiert, wobei die Drehachse **6** mit einer nicht gesondert dargestellten Längsachse der Abtriebswelle **30** des Antriebs **5** übereinstimmend ausgebildet ist. Mithin ist die Drehachse 6 ebenfalls vertikal orientiert. Dies ergibt sich besonders gut anhand von **Figur 3****.** Zwischen den beiden Scheiben **31** des Förderrads **7** sind in dem gezeigten Beispiel insgesamt drei Förderelemente **8, 9, 10** angeordnet, wobei Längsachsen der Förderelemente **8, 9, 10** parallel zu der Drehachse **6** des Förderrads **7** orientiert sind. Ferner sind die Förderelemente **8, 9, 10** jeweils in einem für alle Förderelemente **8, 9, 10** gleichen radialen Abstand bezogen auf die Drehachse **6** angeordnet, sodass die Längsachsen der Förderelemente **8, 9, 10** in einem senkrecht zu der Drehachse 6 geführten Schnitt auf einem gemeinsamen Kreis liegen, dessen Radius im Sinne der vorliegenden Anmeldung als Elementradius **11** bezeichnet wird. Dies ergibt sich besonders gut anhand von **Figur 1****.** Der Elementradius **11** beträgt in dem gezeigten Beispiel ca. 4 cm. Die Förderelemente **8, 9, 10** sind ferner in einem äquidistanten Winkelabstand bezogen auf die Drehachse **6** relativ zueinander angeordnet, der hier entsprechend jeweils 120° beträgt. Da die Drehachse **6** vertikal orientiert ist, ist das Förderrad **7** in einer senkrecht zu der Drehachse **6** orientierten Ebene drehantreibbar, wobei der Kreis, auf dem sich die Förderelemente **8, 9, 10** im Zuge des Drehantriebs des Förderrads **7** bewegen, in dieser Ebene liegt.

Die Förderelemente **8, 9, 10** sind jeweils zylinderförmig ausgebildet, wobei ein jeweiliger äußerer Mantel frei um die Längsachse des jeweiligen Förderelements **8, 9, 10** drehbar ist. Das Förderrad **7** ist mittels eines Verbindungsmittels mit der Abtriebswelle **30** verbunden, sodass das Drehmoment, das auf die Abtriebswelle **30** wirkt, auf die Scheiben **31** übertragbar ist. Auf diese Weise können mittels eines Betriebs des Antriebs **5** die Förderelemente **8, 9, 10** auf einer Kreisbahn um die Drehachse **6** geführt werden. Mit Verweis auf die Darstellung gemäß **Figur 1** wird in dem gezeigten Beispiel während eines normalen Förderbetriebs der Förderreinrichtung **1** das Förderrad **7** im Uhrzeigersinn angetrieben.

Die Förderreinrichtung **1** verfügt ferner über einen Förderschlauch **12,** der von einem elastischen Material gebildet ist. Damit ist der Förderschlauch **12** dazu geeignet, wiederholt elastisch verformt zu werden und sich wieder elastisch zurück zu verformen. Entsprechend kann der Förderschlauch **12** zusammengedrückt bzw. gequetscht werden, sodass ein innerer Querschnitt ("Kanalquerschnitt") eines inneren Kanals ("Förderkanal") des Förderschlauchs **12** unter Einwirkung einer Kraft vollständig überdrückt und damit auf null reduziert werden kann und sich nach Wegnahme der Kraft wieder zurück verformen kann und der Kanalquerschnitt freigegeben wird. Der Kanalquerschnitt ist vorzugsweise kreisflächenförmig ausgebildet. In dem gezeigten Beispiel ist der Förderschlauch **12** von Silikon gebildet.

Zwecks luftdichten Anschlusses an sowohl den Eingang **3** als auch den Ausgang **4** ist der Förderschlauch **12** auf entsprechende Anschlussnippel **32** des Eingangs **3** bzw. des Ausgangs **4** aufgesteckt. Hierdurch ist eine strömungstechnische Verbindung zwischen dem Eingang **3** und dem Ausgang **4** geschaffen, wobei der Förderschlauch **12** einen Förderkanal **2** bereitstellt, durch den hindurch die pulverförmigen Stoffe gefördert werden können. In einem unbelasteten Zustand des Förderschlauchs **12,** in dem dieser nicht mit Druckkräften beaufschlagt wird, weist der Kanalquerschnitt des Förderkanals **2,** der innerhalb des Förderschlauchs **12** vorliegt, zumindest im Wesentlichen die Form einer Kreisfläche auf. Eine Abweichung von dieser Form erfährt der Kanalquerschnitt infolge einer Verformung des Förderschlauchs **12,** die gemäß nachfolgender Beschreibung insbesondere infolge von Druckkräften bedingt ist, die durch die Förderelemente **8, 9, 10** in Zusammenwirkung mit einem Gegenlagerelement **13** gezielt auf den Förderschlauch **12** ausgeübt werden. Der Förderschlauch **12** erstreckt sich in dem gezeigten Beispiel in einer horizontalen Förderebene, die senkrecht zu der Drehachse **6** des Förderrads **7** orientiert ist. Die Förderung der pulverförmigen Stoffe mittels der Förderreinrichtung **1** erfolgt demzufolge in horizontale Richtung und ohne die Mitwirkung der Schwerkraft.

Entsprechend verfügt die Förderreinrichtung **1** ferner über das genannte Gegenlagerelement **13,** das hier in Form eines einstückigen Bügels ausgebildet ist, der eine kreisbogenförmige Andrückseite **14** bereitstellt. Die Andrückseite **14** weist bezogen auf die Drehachse **6** einen Andrückradius **18** auf, der den Elementradius der Förderelemente **8, 9, 10** übersteigt. Insbesondere kann das Gegenlagerelement **13** in seiner Positionierung relativ zu dem Förderrad **7** derart gewählt werden, dass eine Differenz des Andrückradius **14** und des Elementradius **11** zumindest im Wesentlichen der Summe aus einer doppelten Wandstärke des Förderschlauchs **12** und einem Radius eines äußeren Mantels eines jeweiligen Förderelements **8, 9, 10** um dessen jeweilige Längsachse entspricht.

In dem gezeigten Beispiel ist das Gegenlagerelement **13** um eine Schwenkachse **26** verschwenkbar gelagert und mittels eines Spannelements **19** in Richtung auf das Förderrad **7** zu vorgespannt, wobei das Gegenlagerelement **13** mittels des Spannelements **19** gefedert gelagert ist. Die Schwenkachse **26** ist hierbei parallel zu der Drehachse **6** des Förderrads **7** orientiert. Auf diese Weise kann ein Abstand der Andrückseite **14** von dem Förderrad **7** verändert werden. Dies ist besonders gut anhand von **Figur 1** erkennbar. Die Schwenkachse **26** ist mit Bezug auf ein Koordinatenkreuz, das in einer Ebene des Förderschlauchs **12** angeordnet ist und dessen x-Achse sich von dem Eingang **3** zu dem Ausgang **4** erstreckt, dessen y-Achse **35** senkrecht zu der x-Achse **34** angeordnet ist und dessen Nullpunkt in der Drehachse **6** des Förderrads **7** angeordnet ist, in einem ersten Quadranten (in **Figur 1** oben links) angeordnet. Ferner ist die Schwenkachse **26** in unmittelbarer Nähe zu einem Anfangspunkt **24** angeordnet, an dem im Zuge einer Umdrehung des Förderrads **7** die Förderelemente **8, 9, 10** ihren Eingriff mit dem Gegenlagerelement **13** beginnen und den Förderschlauch **12** dabei bestimmungsgemäß quetschen. Zwecks Lagerung des Gegenlagerelements **13** in verschwenkbare Weise um die Schwenkachse **26** verfügt das Gegenlagerelement **13** über eine Ausnehmung **16** mit kreisförmigem Querschnitt, mittels der das Gegenlagerelement **13** auf einen korrespondierenden Lagerpin aufgesteckt werden kann. Dieser ist an einer Grundplatte **33** der Förderreinrichtung **1** ausgebildet. Zwecks Fixierung des Gegenlagerelements **13** an dem Lagerpin wird das Gegenlagerelement **13** mittels eines Verbindungsmittels mit dem Lagerpin axial verschraubt. Der Freiheitsgrad des Gegenlagerelements **13** zum Verschwenken um die Schwenkachse **26** ist hierdurch nicht eingeschränkt.

Um den Förderschlauch **12** gezielt mittels des Gegenlagerelements **13** auf das Förderrad **7** zuzudrücken, wirkt das Gegenlagerelement **13** in dem gezeigten Beispiel mit dem genannten Spannelement **19** zusammen, das hier ebenfalls verschwenkbar um eine Schwenkachse **27** gelagert ist. Vergleichbar zu dem Gegenlagerelement **26** verfügt das Spannelement **19** hierzu über eine Ausnehmung, mittels der das Spannelement **19** an einem mit der Grundplatte **33** verbundenen Lagerpin gelagert ist. Das Spannelement **19** verfügt das Weiteren über ein Stellrad **28,** mittels dessen eine Federkraft, mit der das Gegenlagerelement **13** in Richtung des Förderrads **7** vorgespannt ist, einstellbar ist. Die Federkraft des Spannelements **19** kann sich zumindest während eines Förderbetriebs der Fördereinrichtung **1** nicht vollständig entspannen, da das Gegenlagerelement **13** sich zu jedem Zeitpunkt in Zusammenwirkung mit mindestens einem der Förderelemente **8, 9, 10** befindet.

Das Zusammenwirken des Förderrads **7** mit den daran gelagerten Förderelementen **8, 9, 10** und des Gegenlagerelements **13** führt dazu, dass der Förderschlauch **12** in einem Förderabschnitt **15** von den Förderelementen **8, 9, 10** gedrückt bzw. gequetscht und hierdurch an einer entsprechenden Andrückstelle der Kanalquerschnitt des Förderkanals **2** zumindest im Wesentlichen, vorzugsweise vollständig, auf null reduziert wird. Die jeweilige Andrückstelle ist hierbei als eine entlang des Gegenlagerelements **13** wandernde Stelle zu verstehen, die sich infolge der Bewegung eines jeweiligen Förderelements **8, 9, 10** auf seiner Kreisbahn um die Drehachse **6** entlang der Andrückseite **14** des Gegenlagerelements **13** bewegt.

An der Andrückseite **14** weist das Gegenlagerelement **13** in dem gezeigten Beispiel eine Rille **23** auf, die in Form einer lang gestreckten Vertiefung in der Andrückseite **14** ausgebildet ist. Diese Rille **23** dient insbesondere dazu, den Förderschlauch **12** in dessen Förderabschnitt **15** in einer bestimmten Position an der Andrückseite **14** des Gegenlagerelements **13** zu lagern.

In dem gezeigten Beispiel ist das Gegenlagerelement **13** derart ausgebildet, dass ein Umschlingungswinkel **17** des Förderabschnitts **15,** in dem der Förderabschnitt **15** auf einem Kreisbogen um die Drehachse **6** entlang des Gegenlagerelements **13** geführt ist, hier ca. 125° beträgt. Die Andrückseite **14** des Gegenlagerelements **13** ist entsprechend derart ausgebildet, dass sie den Förderschlauch **12** in dem genannten Winkelbereich von 125° das gewünschte Gegenlager für das Andrücken (und damit das Abdrücken) des Förderschlauchs **12** bereitstellt. Die Eingriffwinkelbereiche der Förderelemente **8, 9, 10** betragen demzufolge in dem gezeigten Beispiel ebenfalls ca. 125°. Im Zuge eines Drehantriebs des Förderrads **7** beginnt mithin die Zusammenwirkung eines jeweiligen Förderelements **8, 9, 10** mit dem Gegenlagerelement **13** zum Zweck der Quetschung des Förderschlauchs **12** und einer damit einhergehenden Reduktion des Kanalquerschnitts des Förderkanals **2** auf null an einem Anfangspunkt **24,** an der das jeweilige Förderelement **8, 9, 10** im Zuge einer vollen Umdrehung des Förderrads **7** erstmalig in drückenden Kontakt mit dem Förderschlauch **12** und dem Gegenlagerelement **13** tritt. Die hierdurch ausgebildete Andrückstelle wandert daraufhin entlang der Andrückseite **14** bis zu einem Endpunkt **25.** Bei einer weiteren Drehbewegung des jeweiligen Förderelements **8, 9, 10** verliert selbiges seinen drückenden Eingriff mit dem Gegenlagerelement **13,** wodurch die Andrückstelle aufgelöst wird und sich der Förderschlauch **12** aufgrund seiner elastischen Eigenschaften zurück verformt. Hierdurch wird der Kanalquerschnitt des Förderkanals **2** wieder aufgeweitet, sodass ein Durchtritt von Medien durch den Förderkanal **2** an der jeweiligen Stelle wieder freigegeben wird.

Das Zusammenwirken der Förderelemente **8, 9, 10** mit dem Gegenlagerelement **13** ist dabei derart ausgebildet, dass sich zu jedem Zeitpunkt während eines Förderbetriebs der Förderreinrichtung **1** mindestens ein Förderelement **8, 9, 10** in drückendem Eingriff mit dem Gegenlagerelement **13** steht, sodass der Förderschlauch **12** zu jedem Zeitpunkt an mindestens einer Andrückstelle gedrückt und damit der Kanalquerschnitt des Förderkanals **2** zumindest im Wesentlichen auf null reduziert ist. Diese Ausgestaltung führt dazu, dass in dem Förderschlauch **12** diesseits und jenseits des Förderrads **7** verschiedene Druckzustände herrschen. Mithin liegt in dem Förderschlauch **12** in einem dem Eingang **3** zugewandten Bereich des Förderschlauchs **12** vor dem Förderrad **7** ein Unterdruck vor, sodass diese Seite des Förderrads **7** die "Saugseite" der Förderreinrichtung **1** bildet. Umgekehrt analog liegt in einem Abschnitt des Förderschlauchs **12** zwischen dem Förderrad **7** und dem Ausgang **4** während eines Förderbetriebs der Förderreinrichtung **1** ein Überdruck vor, sodass diese Seite der Förderreinrichtung **1** die "Druckseite" derselben bildet.

Da die Eingriffwinkelbereiche die genannten 125° (und mithin mehr als 120°) betragen, verliert ein jeweiliges Förderelement **8, 9, 10** seinen drückenden Eingriff mit dem Gegenlagerelement **13** in dem gezeigten Beispiel erst dann, wenn ein entgegen der Drehrichtung des Förderrads **7** betrachtet nachfolgendes Förderelement **8, 9, 10** sich bereits in drückendem Eingriff mit dem Gegenlagerelement **13** befindet. Mithin kommt es während des Förderbetriebs der Förderreinrichtung **1** bei jeder vollen Umdrehung des Förderrads **7** um dessen Drehachse jeweils insgesamt dreimal zu einem Zustand, zu dem kurzzeitig zwei der Förderelemente **8, 9, 10** gleichzeitig den Förderschlauch **12** gegen das Gegenlagerelement **13** drücken und hierdurch jeweils eine Andrückstelle ausbilden. Dieser Zustand liegt jedoch jeweils nur über einen sehr kurzen Zeitraum vor, sodass insbesondere die Gefahr einer Verblockung des Förderkanals **2** nicht besteht.

Die Förderreinrichtung **1** verfügt in dem gezeigten Beispiel im Weiteren über eine Druckquelle **20,** die mittels einer Luftleitung **22** mit einem Luftanschluss **21** strömungstechnisch verbunden ist. Die Druckquelle **20,** die in **Figur 1** lediglich schematisch dargestellt ist, kann insbesondere von einem Kompressor gebildet sein. Mittels des Luftanschlusses **21,** der hier an dem Ausgang **4** ausgebildet ist, ist die Möglichkeit geschaffen, einen Förderluftstrom, der mittels der Druckquelle **20** erzeugt wird, in den Förderkanal **2** einzuleiten. Aufgrund der im Förderbetrieb der Fördereinrichtung **1** fortwährenden Versperrung des Förderkanals **2** in dem Förderabschnitt **15** des Förderschlauchs **12** kann die Förderluft nicht ausgehend von dem Ausgang **4** in Richtung des Eingangs **3** strömen, sodass eine unerwünschte Störung der Förderung der pulverförmigen Stoffe in Richtung des Ausgangs **4** unterbunden ist. Stattdessen strömt die Förderluft in eine von der Förderrichtung **1** abgewandte Richtung aus einem Anschluss **29** des Ausgangs **4** heraus, wobei an den Anschluss **29** typischerweise ein in den Figuren nicht dargestellter weiterer Förderschlauch angeschlossen ist. Mittels der Förderluft können die pulverförmigen Stoffe fluidisiert werden, sodass insbesondere einer Verblockung der Stoffe innerhalb des Förderkanals **2** vermieden wird. Die Einbringung der Förderluft trägt damit zu einer Homogenisierung des Massenstroms der pulverförmigen Stoffe bei. Auf diese Weise kann die Förderreinrichtung **1** besonders vorteilhaft in einer Pulverbeschichtungsanlage verwendet werden. Hierfür ist es besonders vorteilhaft, wenn der Förderluftstrom unterbrechungsfrei, das heißt kontinuierlich, in den Förderkanal **2** eingebracht wird.

### Bezugszeichenliste

- 1: Fördereinrichtung
- 2: Förderkanal
- 3: Eingang
- 4: Ausgang
- 5: Antrieb
- 6: Drehachse
- 7: Förderrad
- 8: Förderelement
- 9: Förderelement
- 10: Förderelement
- 11: Elementradius
- 12: Förderschlauch
- 13: Gegenlagerelement
- 14: Andrückseite
- 15: Förderabschnitt
- 16: Ausnehmung
- 17: Umschlingungswinkel
- 18: Andrückradius
- 19: Spannelement
- 20: Druckquelle
- 21: Luftanschluss
- 22: Luftleitung
- 23: Rille
- 24: Anfangspunkt
- 25: Endpunkt
- 26: Schwenkachse
- 27: Schwenkachse
- 28: Stellrad
- 29: Anschluss
- 30: Abtriebswelle
- 31: Scheibe
- 32: Anschlussnippel
- 33: Grundplatte
- 34: x-Achse
- 35: y-Achse

## Patentansprüche

1. Fördereinrichtung (1) zur gerichteten Förderung pulverförmiger Stoffe entlang eines Förderkanals (2), umfassend
- einen Eingang (3),
- einen Ausgang (4),
- einen Antrieb (5),
- ein mittels des Antriebs (5) um eine Drehachse (6) drehantreibbares Förderrad (7),
- eine Mehrzahl von Förderelementen (8, 9, 10), die in einem Elementradius (11) beabstandet von der Drehachse (6) des Förderrads (7) sowie in einer zu der Drehachse (6) orthogonalen Ebene äquidistant um die Drehachse (6) verteilt an dem Förderrad (7) gelagert sind,
- einen sich von dem Eingang (3) zu dem Ausgang (4) erstreckenden, zumindest einen Teil des Förderkanals (2) bereitstellenden, elastischen Förderschlauch (12), entlang dessen die Stoffe gerichtet von dem Eingang (3) zu dem Ausgang (4) leitbar sind,
- ein Gegenlagerelement (13) zur Bildung eines Gegenlagers für den Förderschlauch (12), sodass der Förderschlauch (12) mittels der Förderelemente (8, 9, 10) gegen das Gegenlagerelement (13) drückbar ist,
wobei das Gegenlagerelement (13) derart relativ zu dem Förderrad (7) angeordnet ist, dass sich eine Andrückseite (14) des Gegenlagerelements (13), an der das Gegenlagerelement (13) mit dem Förderschlauch (12) zusammenwirkt, zumindest im Wesentlichen konzentrisch zu dem Förderrad (7) in einem gegenüber dem Elementradius (11) größeren Andrückradius (18) um die Drehachse (6) erstreckt,
wobei die Förderelemente (8, 9, 10), der Förderschlauch (12) und das Gegenlagerelement (13) derart zusammenwirken, dass die Förderelemente (8, 9, 10) jeweils dazu geeignet sind, im Zuge eines Drehantriebs des Förderrads (7) in einem Förderabschnitt (15) des Förderschlauchs (12) den Förderschlauch (12) wandernd an einer Andrückstelle gegen die Andrückseite (14) des Gegenlagerelements (13) zu drücken und dadurch an der Andrückstelle einen Kanalquerschnitt des von dem Förderschlauch (12) bereitgestellten Förderkanals (2) unter elastischer Verformung des Förderschlauchs (12) zumindest im Wesentlichen auf null zu reduzieren,
wobei der Förderabschnitt (19) des Förderschlauchs (12) bezogen auf die Drehachse (6) des Förderrads (7) in einem Umschlingungswinkel (17) von weniger als 180° um das Förderrad (7) geführt ist,
**dadurch gekennzeichnet, dass**
im Zuge eines Drehantriebs des Förderrads (7) sich zu jedem Zeitpunkt mindestens ein Förderelement (8, 9, 10) in Zusammenwirkung mit dem Gegenlagerelement (13) in drückendem Eingriff mit dem Förderschlauch (12) befindet,
wobei das Gegenlagerelement (13) um eine parallel zu der Drehachse (6) des Förderrads (7) orientierte Schwenkachse (18) verschwenkbar gelagert ist,
wobei das Gegenlagerelement (13) mittels eines Spannelements (19) in Richtung auf das Förderrad (7) zu vorgespannt ist.

2. Fördereinrichtung (1) nach einem der vorhergehenden Ansprüche, **gekennzeichnet durch** eine Druckquelle (20) zur Bereitstellung eines Förderluftstroms, einen Luftanschluss (21) zur mittelbaren oder unmittelbaren Einbringung des Förderluftstroms in den Förderkanal (2) sowie eine Luftleitung (22) zur mittelbaren oder unmittelbaren strömungstechnischen Verbindung der Druckquelle (20) mit dem Luftanschluss (21), wobei der Luftanschluss (21) - in Förderrichtung der Stoffe betrachtet - stromabwärts des Förderrads (7) an den Förderkanal (2) angeschlossen ist.

3. Fördereinrichtung (1) nach Anspruch 2, **gekennzeichnet durch** genau einen Luftanschluss (21).

4. Fördereinrichtung (1) nach Anspruch 2 oder 3, **dadurch gekennzeichnet, dass** der Luftanschluss (21) an dem Ausgang (4) ausgebildet ist.

5. Fördereinrichtung (1) nach einem der vorhergehenden Ansprüche, **dadurch gekennzeichnet, dass** das Gegenlagerelement (13) eine sich entlang der Andrückseite (14) erstreckende Rille (23) aufweist, innerhalb der im Zuge eines Eingriffs des Gegenlagerelements (13) mit den Förderelementen (8, 9, 10) der Förderschlauch (12) geführt ist.

6. Fördereinrichtung (1) nach einem der vorhergehenden Ansprüche, **dadurch gekennzeichnet, dass** an dem Förderrad (7) mindestens drei Förderelemente (8, 9, 10), vorzugsweise genau drei Förderelemente (8, 9, 10), gelagert sind, wobei vorzugsweise die Förderelemente (8, 9, 10) bezogen auf die Drehachse (6) des Förderrads (7) äquidistant an dem Förderrad (7) verteilt angeordnet sind.

7. Fördereinrichtung (1) nach Anspruch 6, **dadurch gekennzeichnet, dass** der Umschlingungswinkel (17) des Förderabschnitts (15) um das Förderrad (7) mindestens 110°, vorzugsweise mindestens 120°, und höchstens 160°, vorzugsweise höchstens 140°, weiter vorzugsweise höchstens 130°, beträgt.

8. Fördereinrichtung (1) nach einem der vorhergehenden Ansprüche, **dadurch gekennzeichnet, dass** ein Eingriffwinkelbereich eines jeden Förderelements (8, 9, 10), über den hinweg sich das jeweilige Förderelement (8, 9, 10) im Zuge einer vollen Umdrehung des Förderrads (7) in Eingriff mit dem Gegenlagerelement (13) befindet, mindestens 120° und höchstens 140°, vorzugsweise höchstens 130°, beträgt.

9. Verwendung einer Fördereinrichtung (1) nach einem der vorhergehenden Ansprüche zur Förderung pulverförmiger Stoffe.

10. Verfahren zur gerichteten Förderung pulverförmiger Stoffe mittels einer Fördereinrichtung (1),
die Fördereinrichtung (1) umfassend einen Eingang (3), einen Ausgang (4), einen Antrieb (5), ein mittels des Antriebs (5) um eine Drehachse (6) drehantreibbares Förderrad (7), eine Mehrzahl von Förderelementen (8, 9, 10), die in einem Elementradius (11) beabstandet von der Drehachse (6) des Förderrads (7) sowie in einer zu der Drehachse (6) orthogonalen Ebene äquidistant um die Drehachse (6) verteilt an dem Förderrad (7) gelagert sind, einen sich von dem Eingang (3) zu dem Ausgang (4) erstreckenden, zumindest einen Teil des Förderkanals (2) bereitstellenden, elastischen Förderschlauch (12), entlang dessen die Stoffe gerichtet von dem Eingang (3) zu dem Ausgang (4) leitbar sind, ein Gegenlagerelement (13) zur Bildung eines Gegenlagers für den Förderschlauch (12), sodass der Förderschlauch (12) mittels der Förderelemente (8, 9, 10) gegen das Gegenlagerelement (13) drückbar ist, wobei das Gegenlagerelement (13) derart relativ zu dem Förderrad (7) angeordnet ist, dass sich eine Andrückseite (14) des Gegenlagerelements (13), an der das Gegenlagerelement (13) mit dem Förderschlauch (12) zusammenwirkt, zumindest im Wesentlichen koaxial zu dem Förderrad (7) in einem gegenüber dem Elementradius (11) größeren Andrückradius (18) um die Drehachse (6) erstreckt, wobei die Förderelemente (8, 9, 10), der Förderschlauch (12) und das Gegenlagerelement (13) derart zusammenwirken, dass die Förderelemente (8, 9, 10) jeweils dazu geeignet sind, im Zuge eines Drehantriebs des Förderrads (7) in einem Förderabschnitt (15) des Förderschlauchs (12) den Förderschlauch (12) wandernd an einer Andrückstelle gegen die Andrückseite (14) des Gegenlagerelements (13) zu drücken und dadurch an der Andrückstelle einen Kanalquerschnitt des von dem Förderschlauch (12) bereitgestellten Förderkanals (2) unter elastischer Verformung des Förderschlauchs (12) zumindest im Wesentlichen auf null zu reduzieren, wobei der Förderabschnitt (19) des Förderschlauchs (12) bezogen auf die Drehachse (6) des Förderrads (7) in einem Umschlingungswinkel (17) von weniger als 180° um das Förderrad (7) geführt ist, wobei im Zuge eines Drehantriebs des Förderrads (7) sich zu jedem Zeitpunkt mindestens ein Förderelement (8, 9, 10) in Zusammenwirkung mit dem Gegenlagerelement (13) in drückendem Eingriff mit dem Förderschlauch (12) befindet, wobei das Gegenlagerelement (13) um eine parallel zu der Drehachse (6) des Förderrads (7) orientierte Schwenkachse (18) verschwenkbar gelagert ist,
das Verfahren umfassend die folgenden Verfahrensschritte:
a) Das Förderrad (7) wird mittels des Antriebs (5) um die Drehachse (6) des Förderrads (7) drehangetrieben, wodurch die an dem Förderrad (7) angeordneten Förderelemente (8, 9, 10) jeweils in ihrem Elementradius (11) auf einer Kreisbahn um die Drehachse (6) geführt werden;
b) Die Förderelemente (8, 9, 10) gelangen nacheinander im Zuge einer vollständigen Umdrehung des Förderrads (7) um dessen Drehachse (6) jeweils an einem Anfangspunkt (24) in Zusammenwirkung mit dem Gegenlagerelement (13) in drückenden Eingriff mit dem Förderschlauch (12), wobei eine Andrückstelle, an der das jeweilige Förderelement (8, 9, 10) in Zusammenwirkung mit dem Gegenlagerelement (13) den Kanalquerschnitt des Förderschlauchs (12) unter elastischer Verformung des Förderschlauchs (12) zumindest im Wesentlichen auf null reduziert, im Zuge des Drehantriebs des Förderrads (7) entlang der Andrückseite (14) des Gegenlagerelements (13) bis zu einem Endpunkt (25) wandert, an dem die Zusammenwirkung des jeweiligen Förderelements (8, 9, 10) mit dem Gegenlagerelement (13) endet;
c) Zu jeden Zeitpunkt während eines Betriebs der Fördereinrichtung (1) befindet sich mindestens ein Förderelement (8, 9, 10) in Zusammenwirkung mit dem Gegenlagerelement (13) in drückendem Eingriff mit dem Förderschlauch (12).

11. Verfahren nach Anspruch 10, **dadurch gekennzeichnet, dass** das Gegenlagerelement (13) um eine zu der Drehachse (6) des Förderrads (7) parallel orientierte Schwenkachse (18) verschwenkbar gelagert ist, wobei das Gegenlagerelement (13) mittels eines Spannelements (19) in Richtung auf das Förderrad (7) zu vorgespannt ist, wodurch das Gegenlagerelement (13) fortwährend in Richtung auf das Förderrad (7) zu gedrückt wird.

12. Verfahren nach Anspruch 10 oder 11, **dadurch gekennzeichnet, dass** die Fördereinrichtung (1) eine Druckquelle (20) zur Bereitstellung eines Förderluftstroms, einen Luftanschluss (21) zur mittelbaren oder unmittelbaren Einbringung des Förderluftstroms in den Förderkanal (2) sowie eine Luftleitung (22) zur mittelbaren oder unmittelbaren strömungstechnischen Verbindung der Druckquelle (20) mit dem Luftanschluss (21) umfasst, wobei der Luftanschluss (22) - in Förderrichtung der Stoffe betrachtet - stromabwärts des Förderrads (7) an den Förderkanal (2) angeschlossen ist, wobei mittels der Druckquelle (20) ein Förderluftstrom erzeugt und mittels der Luftleitung (22) zu dem Luftanschluss (21) geführt wird.

13. Verfahren nach Anspruch 12, **dadurch gekennzeichnet, dass** der Förderluftstrom unterbrechungsfrei in den Förderkanal (2) eingebracht wird, vorzugsweise mit einem konstanten Volumenstrom.

14. Verfahren nach einem der Ansprüche 10 bis 13, **dadurch gekennzeichnet, dass** die pulverförmigen Stoffe stromaufwärts des Eingangs (3) fluidisiert werden, vorzugsweise mittels der Einleitung eines Luftvolumenstroms in die pulverförmigen Stoffe.
